# EUROPÄISCHE PATENTSCHRIFT

(11) **EP 3 670 346 B1**
(45) Veröffentlichungstag und Bekanntmachung des Hinweises auf die Patenterteilung: **07.09.2022**
(21) Anmeldenummer: 19218818.3
(22) Anmeldetag: 20.12.2019
(51) Int. Cl.: B64D 11/06

(54) **FLUGZEUGSITZANORDNUNG**
AIRCRAFT SEAT ASSEMBLY
AGENCEMENT DE SIÈGE D'AVION

(30) Priorität: 21.12.2018 DE 102018133541
(43) Veröffentlichungstag der Anmeldung: 24.06.2020
(73) Patentinhaber: Recaro Aircraft Seating GmbH & Co. KG, 74523 Schwäbisch Hall (DE)
(72) Erfinder: Dick, Matthias, 74927 Eschelbronn (DE); Wegner, Thomas, 74613 Öhringen (DE)
(74) Vertreter: Daub, Thomas

(56) Entgegenhaltungen:
- EP-A1- 3 127 811
- EP-A1- 3 521 167
- EP-A2- 1 314 643
- EP-B1- 1 314 643
- DE-A1-102016 114 124
- US-A1- 2008 042 010
- US-A1- 2012 292 957
- US-A1- 2014 283 296
- US-A1- 2016 016 667
- US-A1- 2017 129 611
- US-A1- 2018 281 959
- US-B2- 8 382 036

## Beschreibung

### Die Erfindung betrifft eine Flugzeugsitzanordnung

Dokument DE102016114124 offenbart ein Sitzmodul das nur leicht von der Längsrichtung nach außen gedreht oder parallel dazu angeordnet ist. Dokument US2016016667 bezieht sich auf eine Sitzanordnung, wobei in benachbarten Sitzreihen die einzelnen Sitzbaugruppen in Längsrichtung versetzt zueinander angeordnet sind. Dokument US2012292957 offenbart eine Fischgrät Sitzanordnung, wobei überlappende Sitzreihen konvergent der Längsachse einer Passagierkabine angeordnet sind.

Die Aufgabe der Erfindung besteht insbesondere darin, eine gattungsgemäße Vorrichtung mit verbesserten Eigenschaften hinsichtlich eines besonders vorteilhaften und platzsparenden Layouts mit Full-Flat-Flugzeugsitzen bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

### Vorteile der Erfindung

Die Erfindung geht aus von einer Flugzeugsitzanordnung für eine Flugzeugkabine, mit einer Längsachse, mit wenigstens einem ersten Flugzeugsitz, der als Teil eines ersten Flugzeugsitzbereichs und einer ersten, gangentfernten Sitzreihe ausgebildet ist und eine Flugzeugsitzachse ausbildet, die einen Sitzwinkel mit der Längsachse einschließt, und mit wenigstens einem zweiten, benachbart zu dem ersten Flugzeugsitz angeordneten Flugzeugsitz, der wenigstens als Teil eines zweiten Flugzeugsitzbereichs und einer zweiten, gangseitigen Sitzreihe ausgebildet ist und eine Flugzeugsitzachse ausbildet, die einen Sitzwinkel mit der Längsachse einschließt.

Es wird gemäß der Erfindung vorgeschlagen, dass der Sitzwinkel des ersten Flugzeugsitzes und der Sitzwinkel des zweiten Flugzeugsitzes betragsmäßig unterschiedlich groß sind. Unter einer "Flugzeugsitzanordnung" soll insbesondere eine Anordnung von mehreren, in Reihen angeordneten Flugzeugsitzen, die vorzugsweise auf einem Kabinenboden einer Flugzeugkabine hintereinander aufgeständert sind, verstanden werden. Unter einem "Flugzeugsitz" soll dabei insbesondere ein Sitz verstanden werden, der dazu vorgesehen ist, in einer Flugzeugkabine eines Flugzeugs auf einem Kabinenboden aufgeständert zu werden, und auf dem ein Passagier während eines Flugs sitzen kann. Dabei weist der Flugzeugsitz zumindest einen Sitzboden und eine mit dem Sitzboden gekoppelte Rückenlehne auf, wobei die Rückenlehne vorzugsweise verschwenkbar mit dem Sitzboden verbunden ist, wodurch der Flugzeugsitz vorzugsweise in unterschiedliche Funktionsstellungen bewegbar ist. Unter einer "Aufständereinheit" soll dabei insbesondere eine Einheit verstanden werden, über die der Flugzeugsitz fest mit einem Kabinenboden gekoppelt ist und dazu insbesondere wenigstens einen Sitzfuß, der über eine Befestigungsschiene fest mit dem Kabinenboden gekoppelt ist, und wenigstens ein mit dem Sitzfuß verbundenes Querelement aufweist, an dem zumindest ein Sitzteiler und/oder ein Sitzboden des Flugzeugsitzes angebunden ist. Unter einer "Rückenlehne" soll dabei insbesondere ein Element des Flugzeugsitzes verstanden werden, das zumindest einen Teil einer Rückenlehnenauflagefläche ausbildet, an der ein auf dem Flugzeugsitz sitzender Passagier seinen Rücken anlehnen kann. Dabei umfasst die Rückenlehne vorzugsweise zumindest einen Grundkörper und eine Polstereinheit, welche die Rückenlehnenauflagefläche ausbildet. Die Rückenlehne weist vorzugsweise einen tragenden Rahmen auf, über den die Rückenlehne mit der Aufständereinheit und/oder dem Sitzboden verbunden ist. Ein Rahmen der Rückenlehne kann dabei als ein umlaufender Rahmen, beispielsweise aus einem Leichtmetall, oder einstückig mit dem Rest der Rückenlehne aus einem selbsttragenden Faserverbundwerkstoff gebildet sein. Die Rückenlehne ist dabei an einem hinteren Ende des Sitzbodens angeordnet und erstreckt sich von der Sitzbodeneinheit nach oben, von einer Aufständereinheit weg. Unter einem "Sitzboden" soll dabei insbesondere ein Bauteil eines Flugzeugsitzes verstanden werden, das einen Sitzbereich für einen Passagier ausbildet. Unter einem "Sitzbereich" soll dabei insbesondere ein Bereich des Flugzeugsitzes verstanden werden, der dazu vorgesehen ist, dass ein Passagier, insbesondere während eines Flugs, darauf sitzt. Die Flugzeugsitze sind vorzugsweise als Businessclass-Flugzeugsitz oder Firstclass-Flugzeugsitz ausgebildet. Unter einem "Businessclass-Flugzeugsitz" oder einem "Firstclass-Flugzeugsitz" soll insbesondere ein Flugzeugsitz mit einem entsprechenden Flugzeugsitzbereich verstanden werden, der für eine Businessklasse oder entsprechend einen Firstclass-Bereich in einem Flugzeug vorgesehen ist und dabei vorzugsweise in eine volle Liegeposition verfahren werden kann. Die Flugzeugsitze sind vorzugsweise insbesondere als Full-Flat-Flugzeugsitze ausgebildet, die zwischen einer im Wesentlichen aufrechten Sitzstellung in eine Liegestellung verstellt werden können, in der die Flugzeugsitze eine im Wesentlichen ebene, vorzugsweise komplette Liegefläche ausbilden. Unter einer "Längsachse" soll insbesondere eine Längsachse der Flugzeugkabine verstanden werden, in der die Flugzeugsitze aufgeständert sind, wobei die Längsachse insbesondere eine Haupterstreckungsrichtung des Flugzeugs ausbildet, wobei sich die Längsachse von einem Heck des Flugzeugs zu einem Bug des Flugzeugs erstreckt. Die Längsachse bildet eine Mittelachse des Flugzeugs bzw. der Flugzeugkabine, in der die Flugzeugsitze aufgeständert sind, aus. Unter einer "ersten, gangentfernten Sitzreihe" soll insbesondere eine Sitzreihe verstanden werden, deren Flugzeugsitze keinen direkten Zugang zu einem Gang, insbesondere einem Kabinengang, in einer Flugzeugkabine aufweisen. Dabei ist zwischen einer gangentfernten Sitzreihe und dem nächsten Kabinengang vorzugsweise zumindest eine weitere Sitzreihe angeordnet. Unter einer "Flugzeugsitzachse" soll insbesondere eine Achse, vorzugsweise eine Mittelachse eines Flugzeugsitzes, verstanden werden. Die Flugzeugsitzachse entspricht vorzugsweise einer Sitzachse des Flugzeugsitzes. Die Flugzeugsitzachse ist in einer aufrechten Stellung des Flugzeugsitzes, in welcher die Rückenlehne zumindest im Wesentlichen senkrecht zu einem Boden ausgerichtet ist, parallel zu dem Kabinenboden und zumindest im Wesentlichen senkrecht zu der von der Rückenlehne gebildeten Rückenlehnenfläche ausgerichtet. Die Sitzrichtung entspricht im Wesentlichen einer Richtung, in der ein Passagier in aufrechter Weise gerade auf dem Flugzeugsitz sitzt. Unter einem "Sitzwinkel" soll insbesondere ein Winkel verstanden werden, den der Flugzeugsitz mit einer Referenzachse, vorzugsweise insbesondere der Längsachse der Flugzeugsitzkabine aufweist. Der Sitzwinkel wird insbesondere zwischen der Flugzeugsitzachse des entsprechenden Flugzeugsitzes und der Längsachse der Flugzeugkabine, gemessen. Unter einem "ersten Flugzeugsitz" und einem "zweiten Flugzeugsitz" sollen insbesondere Flugzeugsitze verstanden werden, die vorzugsweise im Wesentlichen gleich aufgebaut sind und sich vorzugsweise lediglich durch eine Anordnung in einer anderen Sitzreihe und durch eine unterschiedliche Ausrichtung, insbesondere durch einen unterschiedlichen Sitzwinkel, unterscheiden. Vorzugsweise weisen die ersten und zweiten Flugzeugsitze zumindest im Wesentlichen die gleichen Bauteile auf und sind insbesondere im Wesentlichen gleich konfiguriert. Bauteile der Flugzeugsitzbereiche, in denen der erste oder zweite Flugzeugsitz angeordnet sind, können sich unterscheiden, insbesondere um die unterschiedliche Ausrichtung der beiden Flugzeugsitze zu erreichen. Insbesondere neben den Flugzeugsitzen angeordnete Konsolen, Umhausungen der jeweiligen Flugzeugsitzbereiche sowie Fußablagebereiche (Ottomane) und Flugzeugsitzbereiche der ersten und zweiten Flugzeugsitze unterscheiden sich voneinander. Erste Flugzeugsitze, die in der ersten Sitzreihe angeordnet sind, sind vorzugsweise jeweils identisch zueinander ausgebildet, wobei auch die weiteren, den jeweiligen Flugzeugsitzbereich bildenden Bauteile gleich ausgebildet sind. Grundsätzlich ist es dabei aber auch denkbar, dass es hier zwischen einzelnen Flugzeugsitzbereichen und/oder auch in den jeweiligen Flugzeugsitzen einer Sitzreihe Unterschiede gibt, insbesondere beispielsweise in den ersten und letzten Flugzeugsitzen bzw. Flugzeugsitzbereichen einer Sitzreihe. Unter "benachbart angeordnet" soll insbesondere unmittelbar nebeneinander angeordnet oder verlaufend verstanden werden. Unter einer "zweiten gangseitigen Sitzreihe" soll insbesondere eine Sitzreihe verstanden werden, deren Flugzeugsitze einen direkten Zugang zu einem Gang, insbesondere einem Kabinengang, in einer Flugzeugkabine aufweisen. Dabei ist zwischen einer gangseitigen Sitzreihe und dem Kabinengang vorzugsweise insbesondere keine weitere Sitzreihe angeordnet. Dabei ist es insbesondere denkbar, dass eine Flugzeugkabine einen Kabinengang oder mehrere Kabinengänge, vorzugsweise insbesondere zwei Kabinengänge, aufweist. Unter einer "Sitzreihe" soll insbesondere eine Reihe von zumindest im Wesentlichen hintereinander angeordneten Flugzeugsitzen verstanden werden, wobei die Flugzeugsitze einer Sitzreihe dabei in Bezug auf ihre Flugzeugsitzachsen insbesondere nicht fluchtend hintereinander angeordnet sind. Die in einer Sitzreihe hintereinander angeordneten Flugzeugsitze sind vorzugsweise insbesondere im Bezug auf die Längsachse der Flugzeugsitzkabine im Wesentlichen hintereinander, vorzugsweise insbesondere im Wesentlichen fluchtend angeordnet. Dabei ist es insbesondere denkbar, dass in einer Sitzreihe hintereinander angeordnete Flugzeugsitze unterschiedliche Sitzwinkel zu der Längsachse der Flugzeugkabine aufweisen. Unter "betragsmäßig unterschiedlich großen Winkeln" soll insbesondere verstanden werden, dass ein Betrag des einen Winkels, insbesondere des Sitzwinkels des ersten Flugzeugsitzes einen anderen Wert aufweist als ein Betrag des anderen Winkels, insbesondere des Sitzwinkels des zweiten Flugzeugsitzes. Unter "vorgesehen" soll insbesondere speziell ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Durch eine erfindungsgemäße Ausgestaltung kann ein besonders vorteilhaftes Layout für eine Flugzeugkabine bereitgestellt werden, bei dem Flugzeugsitze, insbesondere Full-Flat-Flugzeugsitze, die in einer Stellung eine komplette Liegefläche ausbilden, besonders platzsparend in der Flugzeugkabine angeordnet werden können.

Weiter wird gemäß der Erfindung vorgeschlagen, dass der wenigstens eine erste Flugzeugsitz einen positiven Sitzwinkel und der wenigstens eine zweite Flugzeugsitz einen negativen Sitzwinkel relativ zu der Längsachse ausbildet. Unter einem "positiven Sitzwinkel relativ zu der Längsachse" soll insbesondere ein Winkel verstanden werden, der sich im mathematisch positiven Drehsinn, also gegen den Uhrzeigersinn, von der Längsachse wegerstreckt. Ein positiver Sitzwinkel öffnet sich von der Längsachse im mathematisch positiven Drehsinn, also gegen den Uhrzeigersinn. Die Flugzeugsitzachse, die zusammen mit der Längsachse einen positiven Sitzwinkel aufspannt, ist von der Längsachse aus im mathematisch positiven Drehsinn, also entgegen dem Uhrzeigersinn, von der Längsachse weggedreht. Unter einem "negativen Sitzwinkel zu der Längsachse" soll insbesondere ein Winkel verstanden werden, der sich im mathematisch negativen Drehsinn, also mit dem Uhrzeigersinn, von der Längsachse wegerstreckt. Ein negativer Sitzwinkel öffnet sich von der Längsachse im mathematisch negativen Drehsinn, also mit dem Uhrzeigersinn. Die Flugzeugsitzachse, die zusammen mit der Längsachse einen negativen Sitzwinkel aufspannt, ist von der Längsachse aus im mathematisch negativen Drehsinn, also mit dem Uhrzeigersinn von der Längsachse weggedreht. Dadurch können die Flugzeugsitze der ersten Sitzreihe und die Flugzeugsitze der zweiten Sitzreihe besonders vorteilhaft zueinander angeordnet werden und so kann ein besonders platzsparendes Layout bereitgestellt werden.

Ferner wird vorgeschlagen, dass sich die Sitzwinkel des ersten Flugzeugsitzes und des zweiten Flugzeugsitzes betragsmäßig um zumindest 1 Grad unterscheiden. Dadurch kann ein besonders vorteilhaftes Layout von Sitzreihen erreicht werden. Insbesondere kann vorteilhaft eine besonders große Packungsdichte, also eine gute Raumausnutzung, erreicht werden und eine Gangbreite für unterschiedliche Flugzeugmodelle besonders vorteilhaft eingestellt werden.

Des Weiteren wird gemäß der Erfindung vorgeschlagen, dass die Flugzeugsitze der beiden unterschiedlichen Sitzreihen in einer Querrichtung teilweise überlappend angeordnet sind. Unter einer "Querrichtung" soll insbesondere eine orthogonal zu der Längsrichtung der Flugzeugkabine, parallel zu dem Kabinenboden verlaufende Richtung verstanden werden, die sich von einer Seitenwandung der Flugzeugkabine zu einer gegenüberliegenden Seitenwandung der Flugzeugkabine erstreckt. Unter 'in Querrichtung zumindest teilweise überlappend angeordnet", soll insbesondere verstanden werden, dass zumindest ein Teilbereich des einen Flugzeugsitzes in zumindest einer Sitzstellung zumindest einen Teilbereich des anderen Flugzeugsitzes in zumindest einer Sitzstellung in Querrichtung überlappt. Dadurch kann insbesondere ein in Querrichtung vorteilhaft kompaktes Layout bereitgestellt werden.

Es wird weiter vorgeschlagen, dass die Flugzeugsitze beider Sitzreihen jeweils einen barrierefreien Kabinengangzugang aufweisen. Unter einem "barrierefreien Kabinengangzugang" soll insbesondere verstanden werden, dass von jedem Flugzeugsitz der Kabinengang ohne ein zwischen dem Flugzeugsitz und dem Kabinengang liegendes Hindernis, wie insbesondere einen anderen Flugzeugsitz, erreicht werden kann.

Erfindungsgemäß, weist jeder Flugzeugsitzbereich eines Flugzeugsitzes einen Durchgangsbereich auf, der den Flugzeugsitzbereich direkt mit dem Kabinengang verbinden kann. Grundsätzlich ist es denkbar, dass ein Türelement, das zwischen einem geschlossenen und einem geöffneten Zustand verstellt werden kann, in dem Durchgangsbereich angeordnet sein kann. Dadurch kann das Layout besonders vorteilhaft ausgebildet werden, indem insbesondere alle Flugzeugsitze des Layouts leicht für einen Passagier erreichbar sind, wodurch ein Komfort erhöht werden kann.

Weiterhin wird gemäß der Erfindung vorgeschlagen, dass der Sitzwinkel des Flugzeugsitzes der ersten Sitzreihe zwischen 4 Grad und 15 Grad beträgt. Dadurch kann der Flugzeugsitz der ersten Sitzreihe besonders vorteilhaft für ein kompaktes Layout ausgerichtet werden. Es wird weiter vorgeschlagen, dass der wenigstens eine erste Flugzeugsitz der ersten Sitzreihe gangabgewandt angeordnet ist. Unter "gangabgewandt angeordnet" soll insbesondere verstanden werden, dass der Flugzeugsitz nicht direkt an einen Kabinengang der Flugzeugsitzkabine angrenzt, sondern beispielsweise an einer Bordwand angeordnet ist und dass wenigstens eine Sitzreihe zwischen dem Flugzeugsitz und dem nächsten Kabinengang angeordnet ist. Erfindungsgemäß ist es so, dass der Flugzeugsitz einen direkten Gangzugang aufweist, der nicht durch einen Sitzbereich eines anderen Flugzeugsitzes führt. Dadurch kann der erste Flugzeugsitz besonders vorteilhaft in dem Layout angeordnet werden.

Zudem wird vorgeschlagen, dass der Sitzwinkel des Flugzeugsitzes der zweiten Sitzreihe zwischen 10 und 20 Grad beträgt. Dadurch kann der Flugzeugsitz der zweiten Sitzreihe besonders vorteilhaft für ein kompaktes Layout ausgerichtet werden.

Weiter wird vorgeschlagen, dass der wenigstens eine zweite Flugzeugsitz der zweiten Sitzreihe gangseitig angeordnet ist. Unter "gangseitig angeordnet" soll insbesondere verstanden werden, dass der Flugzeugsitz direkt an einen Gang der Flugzeugsitzkabine angrenzt, und insbesondere einen direkten Gangzugang aufweist. Insbesondere ist kein weiterer Sitz oder keine Sitzreihe zwischen dem Flugzeugsitz und dem nächsten Gang angeordnet. Dadurch kann der zweite Flugzeugsitz besonders vorteilhaft in dem Layout angeordnet werden.

Ferner wird vorgeschlagen, dass die Flugzeugsitzanordnung zumindest einen, hinter dem ersten Flugzeugsitz der ersten Sitzreihe angeordneten weiteren ersten Flugzeugsitz aufweist, wobei ein Längsabstand des einen ersten Flugzeugsitzes der ersten Sitzreihe zu dem einen, unmittelbar benachbart angeordneten zweiten Flugzeugsitz der zweiten Sitzreihe unterschiedlich groß ist wie der Längsabstand des einen zweiten Flugzeugsitzes der zweiten Sitzreihe zu dem weiteren ersten Flugzeugsitz der ersten Sitzreihe. Unter einem "weiteren ersten Flugzeugsitz" soll insbesondere ein weiterer erster Flugzeugsitz verstanden werden, der im Wesentlichen identisch zu dem ersten Flugzeugsitz der ersten Sitzreihe ausgebildet ist und in der ersten Sitzreihe unmittelbar hinter dem einen ersten Flugzeugsitz der ersten Sitzreihe angeordnet ist. Unter einem "Längsabstand" soll dabei insbesondere ein Abstand verstanden werden, der insbesondere in Längsrichtung gemessen ist. Ein Längsabstand ist insbesondere lediglich von einer in Längsrichtung verlaufenden Abstandskomponente eines Abstands zwischen zwei Punkten gebildet. Unter einem "Längsabstand zwischen zwei Flugzeugsitzen" soll insbesondere ein Abstand zwischen zwei Flugzeugsitzen, insbesondere zwischen zwei definierten Messpunkten, die bei beiden Flugzeugsitzen gleich ausgebildet sind, entlang der Längsrichtung verstanden werden. Der Längsabstand zwischen zwei Messpunkten der beiden Flugzeugsitze wird insbesondere lediglich von einer in Längsrichtung verlaufenden Abstandskomponente eines Abstands zwischen den Messpunkten gebildet. Unter einem "definierten Messpunkt" soll insbesondere ein bei allen Flugzeugsitzen vorhandener Punkt verstanden werden, der bei allen Flugzeugsitzen gleich ausgebildet ist, also insbesondere an einer selben Stelle an dem Sitzboden oder der Rückenlehne angeordnet ist. Die definierten Messpunkte sind insbesondere eindeutig identifizierbar und in allen Flugzeugsitzen gleich ausgebildet. Die definierten Messpunkte können beispielsweise durch einen SRP-Punkt gebildet werden, durch einen definierten Mittelpunkt der Sitzfläche, durch einen vordersten Punkt, durch eine Messbohrung oder einen anderen dem Fachmann als Referenzpunkt für eine Messung als sinnvoll erscheinenden Punkt. Dadurch kann das Layout besonders vorteilhaft ausgebildet werden.

Es wird weiterhin vorgeschlagen, dass die ersten und zweiten Flugzeugsitze dazu vorgesehen sind, zumindest in einer Liegestellung eine Liegefläche auszubilden.

Unter einer "Liegestellung" soll dabei insbesondere eine Stellung des Flugzeugsitzes verstanden werden, in dem zumindest die Rückenlehne, der Sitzboden und/oder beispielsweise eine Fußstützeinheit eine durchgehende, vorzugsweise im Wesentlichen ebene Liegefläche ausbilden. Grundsätzlich ist es dabei denkbar, dass zusätzlich eine getrennt von dem Flugzeugsitz ausgebildete Ottomane die Liegefläche in der Liegestellung des Flugzeugsitzes vergrößert. Unter einer ebenen Liegefläche ist dabei vorzugsweise eine zu dem Kabinenboden leicht geneigte Liegefläche zu verstehen, die vorzugsweise um 3 Grad zu dem Kabinenboden geneigt ist, um in einem Flugbetrieb eine optimale Liegefläche auszubilden. Unter einer "Liegefläche" soll insbesondere eine Fläche verstanden werden, auf der eine normal große Person komfortabel ausgestreckt liegen kann. Eine Liegefläche weist dabei gemäß der Erfindung eine Haupterstreckung von 175 cm bis 205 cm auf. Eine Liegefläche weist eine Breitenerstreckung von in etwa 25 cm bis 60 cm auf. Dadurch können die Flugzeugsitze besonders vorteilhaft ausgebildet werden.

Des Weiteren wird vorgeschlagen, dass die die ersten und zweiten Flugzeugsitze sich in einer Liegestellung in Längsrichtung überlappen. Dadurch kann ein besonders vorteilhaftes Layout erreicht werden.

Zudem wird vorgeschlagen, dass die Flugzeugkabine lediglich einen Kabinengang aufweist. Dadurch kann die Flugzeugsitzanordnung besonders vorteilhaft eingesetzt werden.

Die erfindungsgemäße Flugzeugsitzanordnung soll hierbei nicht auf die oben beschriebene Anwendung und Ausführungsform beschränkt sein. Insbesondere kann die erfindungsgemäße Flugzeugsitzanordnung zu einer Erfüllung einer hierin beschriebenen Funktionsweise eine von einer hierin genannten Anzahl von einzelnen Elementen, Bauteilen und Einheiten abweichende Anzahl aufweisen.

### Zeichnungen

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen, solange sie in den Umfang der vorliegenden Ansprüche fallen.

Es zeigen:
- Fig. 1: eine schematische Draufsicht auf eine Flugzeugsitzanordnung in einer Flugzeugsitzkabine,
- Fig. 2: eine schematische vergrößerte Darstellung von mehreren Flugzeugsitzen zweier benachbarter Sitzreihen und
- Fig. 3: eine schematische Draufsicht auf eine Flugzeugsitzanordnung in einer Flugzeugsitzkabine mit lediglich einem Kabinengang.

### Beschreibung des Ausführungsbeispiels

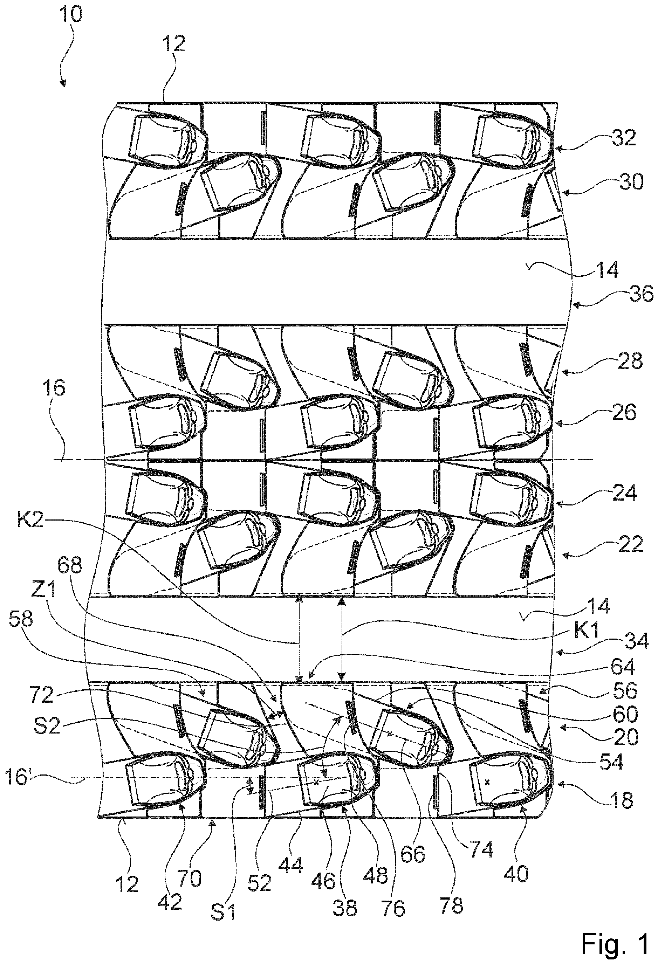

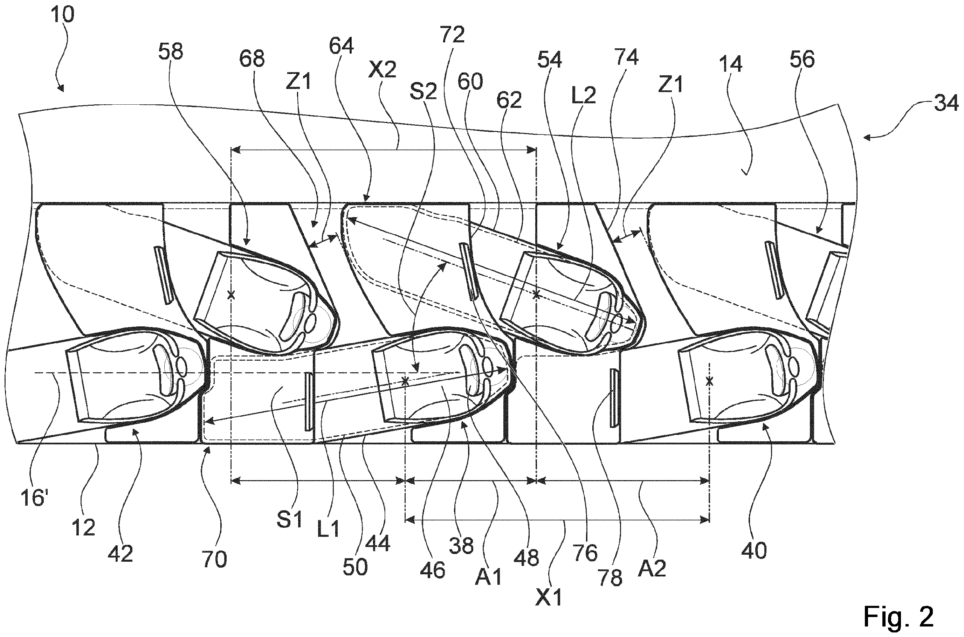

In den Figuren 1 und 2 ist beispielhaft ein Teil einer erfindungsgemäßen Flugzeugsitzanordnung gezeigt. Die Flugzeugsitzanordnung ist dazu vorgesehen, in einer Flugzeugkabine 10 angeordnet zu werden. Die Figur 1 zeigt dabei insbesondere lediglich einen Ausschnitt der Flugzeugsitzanordnung. Die Flugzeugkabine 10 weist eine Bordwand 12 auf, die die Flugzeugkabine 10 nach außen hin abschließt. Die Flugzeugkabine 10 bildet einen Kabinenboden 14 aus. Die Flugzeugsitzanordnung ist dazu vorgesehen, auf dem Kabinenboden 14 der Flugzeugkabine 10 angebunden zu werden. Der Kabinenboden 14 bildet eine Aufständerebene aus. Die Flugzeugkabine 10 weist mehrere, in dem Kabinenboden 14 eingelassene, hier nicht näher gezeigte Befestigungsschienen auf. Die Flugzeugsitzanordnung bildet eine Längsachse 16 aus. Die Längsachse 16 der Flugzeugsitzanordnung entspricht dabei insbesondere einer Längsachse der Flugzeugkabine 10. Die Längsachse der Flugzeugkabine 10 ist als eine Mittelachse der Flugzeugkabine 10 ausgebildet. Die Längsachse erstreckt sich insbesondere parallel zu den seitlichen Bordwänden 12. Die Flugzeugsitzanordnung umfasst mehrere Sitzreihen 18, 20, 22, 24, 26, 28, 30, 32. Die Flugzeugsitzanordnung ist hier beispielhaft mit acht Sitzreihen 18, 20, 22, 24, 26, 28, 30, 32 gezeigt. Dabei sind die zwei Sitzreihen 18, 20 als Paar zusammen an der ersten Bordwand 12 angeordnet, die vier Sitzreihen 22, 24, 26, 28 als Mittelsitzreihen in der Mitte der Flugzeugkabine 10 angeordnet und die zwei Sitzreihen 30, 32 als Paar zusammen an der zweiten gegenüberliegenden Bordwand 12 angeordnet. Die Flugzeugsitzanordnung bildet zwei Kabinengänge 34, 36 aus. Die Kabinengänge 34, 36 verlaufen in Längsrichtung der Flugzeugkabine 10, insbesondere parallel zu der Längsachse 16. Der erste Kabinengang 34 ist dabei zwischen den seitlichen Sitzreihen 18, 20 und den mittleren Sitzreihen 22, 24, 26, 28, insbesondere direkt zwischen der Sitzreihe 20 und der Sitzreihe 22 angeordnet. Der zweite Kabinengang 36 ist zwischen den seitlichen Sitzreihen 30, 32 und den mittleren Sitzreihen 22, 24, 26, 28, insbesondere direkt zwischen der Sitzreihe 28 und der Sitzreihe 30 angeordnet. Die Kabinengänge 34, 36 weisen jeweils eine untere Breite K1 auf. Die untere Breite K1 eines Kabinengangs 34, 36 wird von einem kürzesten Abstand, also einem Abstand in Querrichtung, zwischen den jeweils direkt an den Kabinengang 34, 36 angrenzenden Sitzreihen 20, 22, 28, 30 in einer Höhe, also einem Abstand von dem Kabinenboden 14, von unter 64 cm (25 Zoll) bestimmt. Die Breite K1 der Kabinengänge 34, 36 entspricht 49 cm (19 Zoll). Grundsätzlich ist es denkbar, dass die Breite K1 des Kabinengangs in einem Bereich von 40 cm (16 Zoll) bis 53 cm (21 Zoll) liegt. Die Kabinengänge 34, 36 weisen jeweils eine obere Breite K2 auf. Die obere Breite K2 eines Kabinengangs 34, 36 wird von einem kürzesten Abstand, also einem Abstand in Querrichtung, zwischen den jeweils direkt an den Kabinengang 34, 36 angrenzenden Sitzreihen 20, 22, 28, 30 in einer Höhe, also einem Abstand von dem Kabinenboden 14 von über 64 cm (25 Zoll) bestimmt. Die Breite K2 der Kabinengänge 34, 36 entspricht 53 cm (21 Zoll) Grundsätzlich ist es denkbar, dass die Breite K2 des Kabinengangs 34, 36 in einem Bereich von 51 cm (20 Zoll) bis 66 cm (26 Zoll) liegt. Grundsätzlich ist es auch denkbar, dass die Flugzeugsitzanordnung eine andere Anzahl an Sitzreihen und/oder Kabinengängen aufweist. Insbesondere in Abhängigkeit einer Kabinengröße der Flugzeugkabine 10, die von Flugzeugtyp zu Flugzeugtyp unterschiedlich ist, ist die Anzahl an Sitzreihen und/oder Kabinengängen unterschiedlich. So ist es beispielsweise denkbar, dass die Flugzeugsitzanordnung lediglich vier Sitzreihen 18, 20, 22, 24 und einen Kabinengang 34 aufweist, der die jeweils paarweise angeordneten Sitzreihen 18, 20, 22, 24 voneinander trennt. Grundsätzlich sind auch Flugzeugsitzanordnungen mit lediglich zwei nebeneinander angeordneten Sitzreihen, Flugzeugsitzanordnungen mit sechs Sitzreihen oder Flugzeugsitzanordnungen mit mehr als acht Sitzreihen denkbar. Der erfindungsgemäße Gedanke ist dabei auf die unterschiedlichen Flugzeugsitzanordnungen ohne Weiteres zu übertragen, in der jeweils zwei Sitzreihen paarweise, insbesondere direkt benachbart in der jeweiligen Flugzeugkabine 10 angeordnet sind. Im Folgenden wird beispielhaft lediglich das eine Ausführungsbeispiel mit acht Sitzreihen 18, 20, 22, 24, 26, 28, 30, 32 und zwei Kabinengängen 34, 36 näher beschrieben.

Die Sitzreihen 18, 24, 26, 32 sind als erste Sitzreihen 18, 24, 26, 32 ausgebildet. Die Sitzreihen 20, 22, 28, 30 sind als zweite Sitzreihen 20, 22, 28, 30 ausgebildet. Die ersten Sitzreihen 18, 24, 26, 32 sind als gangabgewandt ausgebildet. Die zweiten Sitzreihen 20, 22, 28, 30 sind gangseitig ausgebildet. Eine erste Sitzreihe 18, 24, 26, 32 und eine zweite Sitzreihe 20, 22, 28, 30 sind jeweils paarweise angeordnet. Eine erste Sitzreihe 18, 24, 26, 32 ist jeweils direkt benachbart zu einer zweiten Sitzreihe 20, 22, 28, 30 angeordnet. Die eine erste Sitzreihe 18 ist direkt an der einen Bordwand 12 angeordnet. Die eine zweite Sitzreihe 20 ist direkt benachbart zu der ersten Sitzreihe 18 angeordnet. Die eine zweite Sitzreihe 20 ist direkt an dem Kabinengang 34 angeordnet. Die eine zweite Sitzreihe 20 ist zwischen dem Kabinengang 34 und der einen ersten Sitzreihe 18 angeordnet. In dem Mittelbereich der Flugzeugkabine 10 ist die eine zweite Sitzreihe 22 direkt an dem Kabinengang 34 angeordnet. Direkt benachbart zu der einen zweiten Sitzreihe 22 ist unmittelbar die eine erste Sitzreihe 24 angeordnet. Direkt benachbart zu der einen ersten Sitzreihe 24 ist die weitere erste Sitzreihe 26 angeordnet. Die erste Sitzreihe 26 ist dabei eine an der Längsachse 16 der Flugzeugkabine 10 gespiegelte Version der ersten Sitzreihe 24. Direkt benachbart neben der einen ersten Sitzreihe 26 ist die eine zweite Sitzreihe 28 angeordnet, die dabei als eine an der Längsachse 16 der Flugzeugkabine 10 gespiegelte Version der einen zweiten Sitzreihe 22 ausgebildet ist. Die eine zweite Sitzreihe 28 grenzt unmittelbar an den Kabinengang 36 an. Auf der gegenüberliegenden Seite des Kabinengangs 36 sind an der Bordwand 12 die eine erste Sitzreihe 32 und die eine zweite Sitzreihe 30 paarweise angeordnet, die jeweils als eine an der Längsachse 16 der Flugzeugkabine 10 gespiegelte Version der einen ersten Sitzreihe 18 bzw. der einen zweiten Sitzreihe 20 ausgebildet sind.

Im Folgenden sollen zur Erläuterung der Anordnung der Flugzeugsitzanordnung lediglich die beiden benachbarten Sitzreihen 18, 20 näher beschrieben werden. Die im Folgenden beschriebene Anordnung der zueinander benachbarten ersten Sitzreihe 18 und der zweiten Sitzreihe 20 lässt sich ebenso auf die anderen ersten Sitzreihen 24, 26, 32 und deren jeweils direkt benachbart angeordnete zweite Sitzreihen 22, 28, 30 übertragen.

Die Flugzeugsitzanordnung weist einen ersten Flugzeugsitz 38 auf, der als Teil der ersten, gangentfernten Sitzreihe 18 ausgebildet ist. Die Flugzeugsitzanordnung weist weitere erste Flugzeugsitze 40, 42 auf, die als Teil der ersten gangentfernten Sitzreihe 18 ausgebildet sind. Übersichtlichkeitshalber sind in den Figuren 1 und 2 lediglich die drei der ersten Flugzeugsitze 38, 40, 42 der ersten gangentfernten Sitzreihe 18 dargestellt. Die Flugzeugsitzanordnung weist pro Sitzreihe 18 vorzugsweise eine größere Anzahl an ersten Flugzeugsitzen 38, 40, 42 auf, wobei die Anzahl insbesondere von der Größe der Flugzeugkabine 10 bzw. von der Größe des für diese Art von Flugzeugsitzen 38, 40, 42 in der Flugzeugkabine 10 zugesprochenen Bereichs abhängt. Grundsätzlich wäre es auch denkbar, dass bei einem kleinen verfügbaren Raum lediglich zwei oder drei erste Flugzeugsitze 38, 40, 42 in einer Sitzreihe 18 vorhanden sind. Die Flugzeugsitze 38, 40, 42 der ersten gangentfernten Sitzreihe 18 sind hintereinander fluchtend angeordnet. Die direkt hintereinander angeordneten Flugzeugsitze 38, 40, 42 der ersten gangentfernten Sitzreihe 18 weisen dabei jeweils einen gleichen Längsabstand X1 zueinander auf. Der eine erste Flugzeugsitz 40 ist in einem Längsabstand X1 hinter dem einen ersten Flugzeugsitz 38 angeordnet. Der andere erste Flugzeugsitz 42 ist in einem Längsabstand X1 vor dem einen ersten Flugzeugsitz 38 angeordnet. Die Längsabstände X1, in denen die Flugzeugsitze 38, 40, 42 jeweils hintereinander angeordnet sind, entsprechen 183 cm (72 Zoll).

Die ersten Flugzeugsitze 38, 40, 42 der ersten gangentfernten Sitzreihe 18 sind im Wesentlichen identisch ausgebildet, weswegen im Folgenden lediglich der erste Flugzeugsitz 38 näher beschrieben werden soll, wobei die Beschreibung des einen ersten Flugzeugsitzes 38 der ersten gangentfernten Sitzreihe 18 auf die anderen Flugzeugsitze 40, 42 der Sitzreihe 18 übertragen werden kann. Der erste Flugzeugsitz 38 ist Teil eines ersten Flugzeugsitzbereichs 44. Der Flugzeugsitzbereich 44 ist insbesondere als ein Bereich ausgebildet, den ein Passagier des ersten Flugzeugsitzes 38 während eines Flugs zur Verfügung hat. Der Flugzeugsitz 38 weist einen Sitzboden 46 auf. Der Flugzeugsitz 38 weist eine Rückenlehne 48 auf. Der Sitzboden 46 und die Rückenlehne 48 sind über eine nicht näher dargestellte Aufständereinheit auf dem Kabinenboden 14 der Flugzeugkabine 10 aufgeständert. Der Flugzeugsitz 38 kann grundsätzlich ebenfalls eine nicht näher dargestellte Fußstütze aufweisen, die an einem vorderen Ende des Sitzbodens 46 schwenkbar angebunden ist.

Der Flugzeugsitz 38 ist als ein Full-Flat-Flugzeugsitz ausgebildet. Der Flugzeugsitz 38 ist dazu vorgesehen, zwischen einer aufrechten Sitzstellung und einer Liegestellung verstellt zu werden. In der aufrechten Sitzstellung ist die Rückenlehne 48 im Wesentlichen senkrecht zu dem Kabinenboden 14 ausgerichtet. Vorzugsweise weist die Rückenlehne 48 der aufrechten Sitzstellung einen Winkel von ungefähr 3 Grad zu einer orthogonal auf dem Kabinenboden 14 stehenden Vertikalachse auf. In der Liegestellung bildet der erste Flugzeugsitz 38 eine im Wesentlichen ebene Liegefläche 50 aus. Zur Ausbildung der Liegefläche 50 werden aus der aufrechten Sitzstellung heraus der Sitzboden 46 und die Rückenlehne 48 so verschwenkt, dass diese zusammen die Liegefläche 50 zumindest im Wesentlichen ausbilden. Der Flugzeugsitzbereich 44 weist an einem vorderen Ende eine Ottomane 70 auf, die einen Fußraum ausbildet, die einen Teil der Liegefläche 50 ausbildet. Grundsätzlich ist es auch denkbar, dass der Flugzeugsitzbereich 44 keine Ottomane 70 aufweist und die Liegefläche 50 lediglich von den Bauteilen des Flugzeugsitzes 38, insbesondere dem Sitzboden 46, der Rückenlehne 48 einer Kopfstütze und/oder der Fußstütze ausgebildet wird. Der Flugzeugsitz 38 bildet in der Liegestellung vorzugsweise eine vollständige Liegefläche 50 aus, auf der eine Durchschnittsperson vorzugsweise ausgestreckt liegen kann. In der Liegestellung bildet der Flugzeugsitz 38 eine Liegefläche 50 aus, die eine Länge L1 aufweist. Die Länge L1 der Liegefläche 50 des ersten Flugzeugsitzes 38 beträgt dabei 190 cm (75 Zoll).

Der Flugzeugsitz 38 bildet eine Flugzeugsitzachse 52 aus. Die Flugzeugsitzachse 52 ist als eine Mittelachse des Flugzeugsitzes 38 ausgebildet. Die Flugzeugsitzachse 52 ist als eine Sitzachse ausgebildet, in die ein gerade auf dem Flugzeugsitz 38 sitzender Passagier ausgerichtet ist. Die Flugzeugsitzachse 52 steht im Wesentlichen senkrecht auf der in einer aufrechten Sitzstellung befindlichen Rückenlehne 48 des Flugzeugsitzes 38 und verläuft insbesondere parallel zu dem Kabinenboden 14. Der Flugzeugsitz 38 ist zu der Längsachse 16 der Flugzeugkabine 10 geneigt auf dem Kabinenboden 14 aufgeständert. Der erste Flugzeugsitz 38 der ersten, gangabgewandten Sitzreihe 18 schließt einen Sitzwinkel S1 mit der Längsachse 16 der Flugzeugkabine 10 ein. Zur einfacheren Darstellung des Sitzwinkels S1 des Flugzeugsites 38 ist in den Zeichnungen eine zu der Längsachse 16 parallel verlaufende Flugzeugachse 16' eingezeichnet zu der der Sitzwinkel S1 angezogen ist.

Die Flugzeugsitzanordnung weist einen zweiten Flugzeugsitz 54 auf, der als Teil der zweiten, gangseitigen Sitzreihe 20 ausgebildet ist. Die Flugzeugsitzanordnung weist weitere zweite Flugzeugsitze 56, 58 auf, die als Teil der zweiten, gangseitigen Sitzreihe 20 ausgebildet sind. Übersichtlichkeitshalber sind in den Figuren 1 und 2 lediglich die drei der zweiten Flugzeugsitze 54, 56, 58 der zweiten, gangseitigen Sitzreihe 20 dargestellt. Die Flugzeugsitzanordnung weist pro zweiter Sitzreihe 20 vorzugsweise eine größere Anzahl an ersten Flugzeugsitzen 54, 56, 58 auf, wobei die Anzahl insbesondere von der Größe der Flugzeugkabine 10 bzw. von der Größe des für diese Art von Flugzeugsitzen 54, 56, 58 in der Flugzeugkabine 10 zugesprochenen Bereichs abhängt. Grundsätzlich wäre es auch denkbar, dass bei einem kleinen verfügbaren Raum lediglich zwei oder drei zweite Flugzeugsitze 54, 56, 58 in einer zweiten Sitzreihe 20 vorhanden sind. Die Flugzeugsitze 54, 56, 58 der zweiten, gangseitigen Sitzreihe 20 sind hintereinander fluchtend angeordnet. Die direkt hintereinander angeordneten Flugzeugsitze 54, 56, 58 der zweiten gangseitigen Sitzreihe 20 weisen dabei jeweils einen gleichen Längsabstand X2 zueinander auf. Der eine erste Flugzeugsitz 56 ist in einem Längsabstand X2 hinter dem einen zweiten Flugzeugsitz 54 angeordnet. Der andere zweite Flugzeugsitz 58 ist in einem Längsabstand X2 vor dem einen ersten Flugzeugsitz 58 angeordnet. Die Längsabstände X2, in denen die Flugzeugsitze 54, 56, 58 jeweils hintereinander angeordnet sind, entsprechen 183 cm (72 Zoll). Die Längsabstände X2, in denen die Flugzeugsitze 54, 56, 58 jeweils hintereinander angeordnet sind, sind gleich groß wie die Abstände X1, in denen die ersten Flugzeugsitze 38, 40, 42 hintereinander angeordnet sind. Durch die Längsabstände X1, X2 von 183 cm (72 Zoll) lässt sich auf die bezogene Bettlänge eine maximale Anzahl an Flugzeugsitzen 38, 40, 42, 54, 56, 58 in einer Flugzeugkabine 10 unterbringen, es kann also eine besonders große Packungsdichte (PAX) erreicht werden. Grundsätzlich wäre es auch denkbar, dass die Längsabstände X1 und X2 unterschiedlich groß sind.

Die zweiten Flugzeugsitze 54, 56, 58 der zweiten, gangseitigen Sitzreihe 20 sind im Wesentlichen identisch ausgebildet, weswegen im Folgenden lediglich der eine zweite Flugzeugsitz 54 näher beschrieben werden soll, wobei die Beschreibung des einen zweiten Flugzeugsitzes 54 der zweiten gangseitigen Sitzreihe 20 auf die anderen Flugzeugsitze 56, 58 der Sitzreihe 20 übertragen werden kann. Der zweite Flugzeugsitz 54 ist Teil eines zweiten Flugzeugsitzbereichs 60. Der zweite Flugzeugsitz 54 ist benachbart zu dem ersten Flugzeugsitz 38 angeordnet. Der Flugzeugsitzbereich 60 ist insbesondere als ein Bereich ausgebildet, den ein Passagier des zweiten Flugzeugsitzes 54 während eines Flugs zur Verfügung hat. Der zweite Flugzeugsitz 54 weist wie der eine erste Flugzeugsitz 38 einen Sitzboden, eine Rückenlehne und/oder eine Fußstütze auf, die aus Übersichtlichkeitsgründen in den Figuren nicht näher angezogen sind. Der eine zweite Flugzeugsitz 54 und damit alle zweiten Flugzeugsitze 54, 56, 58 der zweiten Sitzreihe 20 entsprechen von ihrem Aufbau dem ersten, oben beschriebenen Flugzeugsitz 38.

Der Flugzeugsitz 54 ist als ein Full-Flat-Flugzeugsitz ausgebildet. Der Flugzeugsitz 54 ist dazu vorgesehen, zwischen einer aufrechten Sitzstellung und einer Liegestellung verstellt zu werden. In der Liegestellung bildet der zweite Flugzeugsitz 54 eine im Wesentlichen ebene Liegefläche 62 aus. Zur Ausbildung der Liegefläche 62 werden aus einer aufrechten Sitzstellung heraus der Sitzboden und die Rückenlehne des Flugzeugsitzes 54 so verschwenkt, dass diese zusammen die Liegefläche 62 zumindest im Wesentlichen ausbilden. Der Flugzeugsitzbereich 60 weist an einem vorderen Ende eine Ottomane 64 auf, die einen Fußraum ausbildet, der einen Teil der Liegefläche 62 ausbildet. Grundsätzlich ist es auch denkbar, dass der Flugzeugsitzbereich 60 keine Ottomane 64 aufweist und die Liegefläche 62 lediglich von den Bauteilen des Flugzeugsitzes 54, insbesondere dem Sitzboden, der Rückenlehne, einer Kopfstütze und/oder der Fußstütze ausgebildet wird. Der Flugzeugsitz 54 bildet in der Liegestellung vorzugsweise eine vollständige Liegefläche 62 aus, auf der eine Durchschnittsperson vorzugsweise ausgestreckt liegen kann. In der Liegestellung bildet der Flugzeugsitz 54 eine Liegefläche 62 aus, die eine Länge L2 aufweist. Die Länge L2 der Liegefläche 62 des zweiten Flugzeugsitzes 54 beträgt dabei 190 mm (75 Zoll).

Der Flugzeugsitz 54 bildet eine Flugzeugsitzachse 66 aus. Die Flugzeugsitzachse 66 ist als eine Mittelachse des Flugzeugsitzes 54 ausgebildet. Die Flugzeugsitzachse 66 ist als eine Sitzachse ausgebildet in die ein gerade auf dem Flugzeugsitz 54 sitzender Passagier ausgerichtet ist. Die Flugzeugsitzachse 66 ist steht im Wesentlichen senkrecht auf der in einer aufrechten Sitzstellung befindlichen Rückenlehne des Flugzeugsitzes 54 und verläuft insbesondere parallel zu dem Kabinenboden 14. Der Flugzeugsitz 54 ist zu der Längsachse 16 der Flugzeugkabine 10 geneigt auf dem Kabinenboden 14 aufgeständert. Der zweite Flugzeugsitz 54 schließt einen Sitzwinkel S2 mit der Längsachse 16 der Flugzeugkabine 10 ein.

Der Sitzwinkel S1 des ersten Flugzeugsitzes 38 und der Sitzwinkel S2 des zweiten Flugzeugsitzes 54 sind betragsmäßig unterschiedlich groß. Der Sitzwinkel S1 des ersten Flugzeugsitzes 38 und der Sitzwinkel S2 des zweiten Flugzeugsitzes 54 weisen unabhängig von ihrem Vorzeichen einen unterschiedlichen Wert auf. Der erste Flugzeugsitz 38 und der zweite Flugzeugsitz 54 sind dadurch insbesondere nicht gleichweit zu der Längsachse 16 der Flugzeugkabine 10 verschwenkt. Der erste Flugzeugsitz 38 der ersten, gangabgewandten Sitzreihe 18 und der zweite Flugzeugsitz 54 der zweiten gangseitigen Sitzreihe 20 sind jeweils um einen unterschiedlichen Winkel zu der Längsachse 16 der Flugzeugkabine 10 verschwenkt. Der Sitzwinkel S1 des ersten Flugzeugsitzes 38 und der Sitzwinkel S2 des zweiten Flugzeugsitzes 54 unterscheiden sich betragsmäßig zumindest um 1 Grad. Der Sitzwinkel S1 des ersten Flugzeugsitzes 38 zwischen seiner Flugzeugsitzachse 52 und der Längsachse 16 beträgt zwischen 4 und 15 Grad. Der Sitzwinkel S2 des zweiten Flugzeugsitzes 54 zwischen seiner Flugzeugsitzachse 66 und der Längsachse 16 beträgt zwischen 10 und 20 Grad. Der Sitzwinkel S1 des ersten Flugzeugsitzes 38 ist vorzugsweise immer kleiner als der Sitzwinkel S2 des zweiten Flugzeugsitzes 54. Der Sitzwinkel S1 des ersten Flugzeugsitzes 38 zwischen seiner Flugzeugsitzachse 52 und der Längsachse 16 beträgt 10 Grad. Der Sitzwinkel S2 des zweiten Flugzeugsitzes 54 zwischen seiner Flugzeugsitzachse 66 und der Längsachse 16 beträgt 17,5 Grad.

Die beiden Sitzwinkel S1 und S2 weisen relativ zu der Längsachse 16 der Flugzeugkabine 10 ein unterschiedliches Vorzeichen auf. Der erste Flugzeugsitz 38 und der zweite Flugzeugsitz 54 sind dadurch in unterschiedliche Richtungen, ausgehend von der Längsachse 16, verschwenkt. Die beiden Flugzeugsitze 38, 54 sind durch ihre Sitzwinkel S1, S2, die entgegengesetzte Vorzeichen aufweisen, jeweils in Richtung gegenüberliegender seitlicher Bordwände 12 ausgerichtet. Der eine erste Flugzeugsitz 38 weist einen positiven Sitzwinkel S1 auf. Der eine zweite Flugzeugsitz 54 weist einen negativen Sitzwinkel S2 relativ zu der Längsachse 16 auf. Der Sitzwinkel S1 des ersten Flugzeugsitzes 38 zwischen seiner Flugzeugsitzachse 52 und der Längsachse 16 beträgt dadurch insbesondere +10 Grad. Der Sitzwinkel S2 des zweiten Flugzeugsitzes 54 zwischen seiner Flugzeugsitzachse 66 und der Längsachse 16 beträgt dadurch insbesondere -17,5 Grad.

Grundsätzlich ist es auch denkbar, dass durch eine entsprechende andere Anordnung in der Flugzeugkabine 10 die Flugzeugsitze 38, 40, 42, 54, 56, 58 der jeweiligen ersten und zweiten Sitzreihen 18, 20, 22, 24, 26, 28, 30, 32 jeweils die entgegengesetzte von den oben beschriebenen Sitzwinkeln S1, S2 aufweisen. Dabei ist es insbesondere denkbar, dass, anders als oben beschrieben, Flugzeugsitze 38, 40, 42, einer ersten Sitzreihe 24, 32 einen negativen Sitzwinkel aufweisen. Dabei ist es ebenso denkbar, dass, anders als oben beschrieben, Flugzeugsitze 54, 56, 58 einer zweiten Sitzreihe 22, 30 einen positiven Sitzwinkel aufweisen. Gleichbleibend ist dabei, dass eine der paarweise angeordneten ersten und zweiten Sitzreihen 18, 20, 22, 24, 26, 28, 30, 32 jeweils immer einmal Flugzeugsitze 38, 40, 42, 54, 56, 58 mit einem positiven Sitzwinkel und die andere der paarweise angeordneten ersten und zweiten Sitzreihen 18, 20, 22, 24, 26, 28, 30, 32 jeweils immer einmal Flugzeugsitze 38, 40, 42, 54, 56, 58 mit einem negativen Sitzwinkel aufweisen. Gleichbleibend bei allen paarweise angeordneten Sitzreihen 18, 20, 22, 24, 26, 28, 30, 32 ist auch, dass jeweils die erste Sitzreihe 18, 24, 26, 32, also die gangentfernte Sitzreihe 18, 24, 26, 32, einen kleineren Winkel aufweist als die direkt benachbart angeordnete zweite, also gangseitige Sitzreihe 20, 22, 28, 30.

Die Flugzeugsitze 38, 54 der beiden unterschiedlichen Sitzreihen 18, 20 sind in einer Querrichtung zumindest teilweise überlappend angeordnet. Dadurch ist der eine zweite Flugzeugsitz 54 der zweiten Sitzreihe 20, in Längsrichtung gesehen, zumindest in einem Teilbereich unmittelbar hinter dem einen ersten Flugzeugsitz 38 der ersten Sitzreihe 18 angeordnet. Dadurch können die Sitzreihen 18, 20 in einer Querrichtung besonders vorteilhaft verschachtelt angeordnet werden. In einer Liegestellung überlappen sich der erste Flugzeugsitz 38 der ersten Sitzreihe 18 und der eine benachbarte zweite Flugzeugsitz 54 in einer Längsrichtung. Insbesondere überlappen sich dabei die Liegeflächen 50, 62 der beiden Flugzeugsitze 38, 54 in den Liegestellungen. Dabei überlappt die Liegefläche 62 des hinteren zweiten Flugzeugsitzes 54 in einer Liegestellung ebenfalls mit dem Sitzboden 46 des einen ersten Flugzeugsitzes 38. Durch die in Längsrichtung überlappende Anordnung der Liegeflächen 50, 62 der Flugzeugsitze 38, 54 kann eine besonders vorteilhaft kompakte Staffelung der Flugzeugsitze 38, 54 und der entsprechenden Flugzeugsitzbereiche 44, 60 erreicht werden.

Die Flugzeugsitze 38, 40, 42, 54, 56, 58 beider Sitzreihen 18, 20 weisen jeweils eine Umhausungseinheit 72, 74 auf. In den Figuren sind aus Übersichtlichkeitsgründen lediglich die Umhausungseinheit 72 des einen ersten Flugzeugsitzes 38 und die Umhausungseinheit 74 des einen zweiten Flugzeugsitzes 54 angezogen. Lediglich diese beiden Umhausungseinheiten 72, 74 werden im Folgenden kurz näher erläutert, wobei die Umhausungseinheiten 72, 74 der anderen Flugzeugsitze 40, 42, 56, 58 im Wesentlichen gleich ausgebildet sind. Die beiden Umhausungseinheiten 72, 74 der b er beiden Flugzeugsitze 38, 54 sind jeweils über nicht näher dargestellte Befestigungsmittel und/oder Befestigungsrahmen mit dem Kabinenboden 14 verbunden. Vorzugsweise können die beiden Umhausungseinheiten 72, 74 jeweils einzeln mit dem Kabinenboden 14 verbunden sein. Grundsätzlich ist es dabei denkbar, dass die beiden Umhausungseinheiten 72, 74 dabei in zumindest einem Teilbereich miteinander verbunden sind. Grundsätzlich ist es ebenso denkbar, dass die beiden Umhausungseinheiten 72, 74 zumindest teilweise einstückig miteinander ausgebildet sind und/oder zusammen, also insbesondere mittels eines Befestigungsrahmens mit dem Kabinenboden 14 verbunden sind. Die Umhausungseinheit 72 ist dem ersten Flugzeugsitz 38 zugeordnet. Die Umhausungseinheit 72 bildet eine teilweise Umhausung für den Flugzeugsitz 38 aus, umgibt diesen also zumindest teilweise. Die Umhausungseinheit 72 bildet insbesondere eine Konsole für den Flugzeugsitz 38 aus. Dabei bildet die Umhausungseinheit 72 insbesondere Verstaumöglichkeiten für den Flugzeugsitz 38 aus und umfasst weitere Elemente des Flugzeugsitzbereichs, wie insbesondere einen ausfahrbaren Esstisch, einen Tablethalter, Ablagebereiche und/oder weitere Verstaumöglichkeiten. An der Umhausungseinheit 72 ist an einer Rückseite insbesondere ein Teil eines Flight-Entertainment Systems für den Flugzeugsitz 54 angebracht, wie insbesondere ein Bildschirm 76. Grundsätzlich ist es auch denkbar, dass auch für den ersten Flugzeugsitz 38 ein Teil eines Flight-Entertainment Systems an der Umhausungseinheit 72 angeordnet ist. Die Umhausungseinheit 72 bildet zusätzlich neben dem Flugzeugsitz 38 eine Umhausung für einen Fußbereich des Flugzeugsitzbereiches des Flugzeugsitzes 54 aus. Die Liegefläche des Flugzeugsitzes 54 erstreckt sich zumindest teilweise, insbesondere mit einem Fußbereich unter der von der Umhausungseinheit 72 ausgebildeten Umhausung. Die Umhausungseinheit 74 ist dem zweiten Flugzeugsitz 54 zugeordnet. Die Umhausungseinheit 74 bildet eine teilweise Umhausung für den Flugzeugsitz 54 aus, umgibt diesen also zumindest teilweise. Die Umhausungseinheit 74 bildet insbesondere eine Konsole für den Flugzeugsitz 54 aus. Dabei bildet die Umhausungseinheit 74 insbesondere Verstaumöglichkeiten für den Flugzeugsitz 54 aus und umfasst weitere Elemente des Flugzeugsitzbereichs, wie insbesondere einen ausfahrbaren Esstisch, einen Tablethalter, Ablagebereiche und/oder weitere Verstaumöglichkeiten. An der Umhausungseinheit 74 ist an einer Rückseite insbesondere ein Teil eines Flight-Entertainment Systems für den Flugzeugsitz 40 angebracht, wie insbesondere ein Bildschirm 76. Grundsätzlich ist es auch denkbar, dass auch für den ersten Flugzeugsitz 54 ein Teil eines Flight-Entertainment Systems an der Umhausungseinheit angeordnet ist. Die Umhausungseinheit 74 bildet zusätzlich neben dem Flugzeugsitz 54 eine Umhausung für einen Fußbereich des Flugzeugsitzbereiches des Flugzeugsitzes 40 aus. Die Liegefläche des Flugzeugsitzes 40 erstreckt sich zumindest teilweise, insbesondere mit einem Fußbereich, unter der von der Umhausungseinheit 74 ausgebildeten Umhausung.

Die Flugzeugsitze 38, 40, 42, 54, 56, 58 beider Sitzreihen 18, 20 weisen jeweils einen barrierefreien Kabinengangzugang auf. Die Flugzeugsitze 54, 56, 58 der zweiten, gangseitigen Sitzreihe 20 sind unmittelbar dem Kabinengang 34 zugewandt. Diese Flugzeugsitze 54, 56, 58 der zweiten, gangseitigen Sitzreihe 20 weisen dadurch einen direkten, unmittelbaren Zugang zu dem Kabinengang 34 auf. Die ersten Flugzeugsitze 38, 40, 42 der ersten, gangabgewandten Sitzreihe 18 weisen einen direkten Kabinengangzugang auf, der zwischen zwei Flugzeugsitzbereichen 60 zweier hintereinander angeordneter zweiter Flugzeugsitze 54, 56, 58 der zweiten Sitzreihe 20 verläuft. Jeder Flugzeugsitzbereich 44 eines ersten Flugzeugsitzes 38, 40, 42 der ersten Sitzreihe 18 bildet einen Kabinenzugang 68 aus. Beispielhaft soll hier der Kabinenzugang 68 des Flugzeugsitzbereichs 44 des ersten Flugzeugsitzes 38 beschrieben werden. Der Kabinenzugang 68 des Flugzeugsitzbereichs 44 erstreckt sich zwischen einem vorderen Ende des Flugzeugsitzbereichs 60 des zweiten Flugzeugsitzes 54 und einem hinteren Ende eines Flugzeugsitzbereichs 44 des vor dem Flugzeugsitz 54 angeordneten zweiten Flugzeugsitzes 58. Der Kabinenzugang 68 weist eine Breite Z1 auf. Die Breite Z1 des Kabinenzugangs 68 entspricht dabei 22 cm (9 Zoll) Grundsätzlich ist es auch denkbar, dass der Kabinenzugang 68 eine Breite Z1 von 20 cm bis 35 cm aufweist.

Die Flugzeugsitze 38, 40, 42 der ersten gangentfernten Sitzreihe 18 und die Flugzeugsitze 54, 56, 58 der zweiten gangseitigen Sitzreihe 20 weisen jeweils einen gleichen Längsabstand X1/X2 zueinander auf. Die ersten Flugzeugsitze 38, 40, 42 der ersten gangentfernten Sitzreihe 18 und die Flugzeugsitze 54, 56, 58 der zweiten gangseitigen Sitzreihe 20 sind in Längsrichtung zueinander verschachtelt angeordnet. Insbesondere sind die direkt benachbart angeordneten Flugzeugsitze 38, 40, 42, 54, 56, 58 der ersten gangentfernten Sitzreihe 18 und der zweiten gangseitigen Sitzreihe 20 in Längsrichtung jeweils nicht auf einer gleichen Höhe angeordnet. Die ersten Flugzeugsitze 38, 40, 42 der ersten gangentfernten Sitzreihe 18 und die Flugzeugsitze 54, 56, 58 der zweiten gangseitigen Sitzreihe 20 sind dabei in Längsrichtung insbesondere nicht symmetrisch zueinander verschachtelt angeordnet. Die direkt hinter einem ersten Flugzeugsitz 38, 40, 42 der ersten Sitzreihe 18 angeordneten zweiten Flugzeugsitze 54, 56, 58 der zweiten Sitzreihe 20 weisen einen Längsabstand A1 zu dem davor angeordneten ersten Flugzeugsitz 38, 40, 42 auf. Die direkt hinter einem zweiten Flugzeugsitz 54, 56, 58 der zweiten Sitzreihe 20 angeordneten ersten Flugzeugsitze 38, 40, 42 der ersten Sitzreihe 18 weisen einen Längsabstand A2 zu dem davor angeordneten zweiten Flugzeugsitz 54, 56, 58 auf. Die Längsabstände A1 und A2 zwischen den jeweiligen Flugzeugsitzen 38, 40, 42, 54, 56, 58 sind unterschiedlich groß. Der Längsabstand A1 zwischen einem zweiten Flugzeugsitz 54, 56, 58 und einem unmittelbar davor angeordneten ersten Flugzeugsitz 38, 40, 42 ist kleiner als der Längsabstand A2 zwischen einem ersten Flugzeugsitz 38, 40, 42 und einem unmittelbar davor angeordneten zweiten Flugzeugsitz 54, 56, 58. Dadurch ist der Längsabstand A1 des einen ersten Flugzeugsitzes 38 der ersten Sitzreihe 18 zu dem einen, unmittelbar benachbart angeordneten zweiten Flugzeugsitz 54 der zweiten Sitzreihe 20 unterschiedlich groß ist wie der Längsabstand A2 des einen zweiten Flugzeugsitzes 54 der zweiten Sitzreihe 20 zu dem weiteren ersten Flugzeugsitz 40 der ersten Sitzreihe 18. Der Längsabstand A1 zwischen einem zweiten Flugzeugsitz 54, 56, 58 und einem unmittelbar davor angeordneten ersten Flugzeugsitz 38, 40, 42 beträgt 76,7 cm (31 Zoll). Der Längsabstand A2 zwischen einem ersten Flugzeugsitz 38, 40, 42 und einem unmittelbar davor angeordneten zweiten Flugzeugsitz 54, 56, 58 beträgt 104,1 cm (41 Zoll).

Durch Variation der Sitzwinkel S1/S2 der Flugzeugsitze 38, 40, 42, 54, 56, 58, der Längsabstände X1 und X2 zwischen den Flugzeugsitzen 38, 40, 42, 54, 56, 58 derselben Sitzreihe 18, 20 und der Längsabstände A1/A2 zwischen den Flugzeugsitzen 38, 40, 42, 54, 56, 58 benachbarter Sitzreihen 18, 20 können unterschiedliche Breiten K1, K2 der Kabinengänge34, 36, unterschiedliche Längen L1/L2 der Liegeflächen 50, 62 der Flugzeugsitze 38, 40, 42, 54, 56, 58 und/oder eine unterschiedliche Anzahl von in der Flugzeugkabine 10 unterbringbaren Flugzeugsitzen 38, 40, 42, 54, 56, 58 erreicht werden. Dabei ist es beispielsweise denkbar, dass eine Breite K1 der Kabinengänge 34, 36 von 61 cm (24 Zoll) bereitgestellt werden kann. Vorteilhafte Kombinationen von Sitzwinkeln S1, S2 sind dabei vorzugweise insbesondere S1= +10 Grad und S2= -15 Grad.

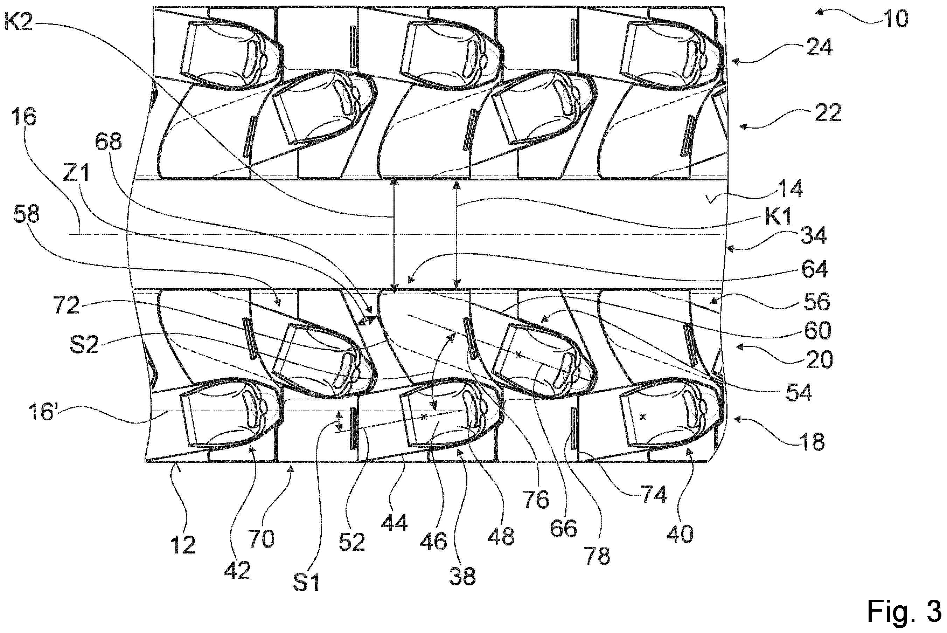

In der Figur 3 ist schematisch eine erfindungsgemäße Flugzeugsitzanordnung für ein Single-Aisle Flugzeug gezeigt, das lediglich einen Kabinengang 34 aufweist. Die Flugzeugsitzanordnung ist dazu vorgesehen, in der Flugzeugkabine 10 angeordnet zu werden, die lediglich den einen Kabinengang 34 aufweist. Die Anordnung der Flugzeugsitze 38, 40, 42, 54, 56, 58 ist dabei im Wesentlichen gleich wie bei der oben beschriebenen Flugzeugsitzanordnung in einer Flugzeugkabine 10 mit zwei Kabinengängen 34, 36. Der Sitzwinkel S1 des ersten Flugzeugsitzes 38 zwischen seiner Flugzeugsitzachse 52 und der Längsachse 16 beträgt insbesondere ebenfalls +10 Grad. Der Sitzwinkel S2 des zweiten Flugzeugsitzes 54 zwischen seiner Flugzeugsitzachse 66 und der Längsachse 16 beträgt für eine Flugzeugkabine 10 mit lediglich einem Kabinengang 34 insbesondere -19 Grad.

### Bezugszeichen

- 10: Flugzeugkabine
- 12: Bordwand
- 14: Kabinenboden
- 16: Längsachse
- 18: Sitzreihe
- 20: Sitzreihe
- 22: Sitzreihe
- 24: Sitzreihe
- 26: Sitzreihe
- 28: Sitzreihe
- 30: Sitzreihe
- 32: Sitzreihe
- 34: Kabinengang
- 36: Kabinengang
- 38: Flugzeugsitz
- 40: Flugzeugsitz
- 42: Flugzeugsitz
- 44: Flugzeugsitzbereich
- 46: Sitzboden
- 48: Rückenlehne
- 50: Liegefläche
- 52: Flugzeugsitzachse
- 54: Flugzeugsitz
- 56: Flugzeugsitz
- 58: Flugzeugsitz
- 60: Flugzeugsitzbereich
- 62: Liegefläche
- 64: Ottomane
- 66: Flugzeugsitzachse
- 68: Kabinenzugang
- 70: Ottomane
- 72: Umhausungseinheit
- 74: Umhausungseinheit
- 76: Bildschirm
- 78: Bildschirm
- K1: Breite Kabinengang
- X1: Längsabstand
- X2: Längsabstand
- L1: Länge Liegefläche
- L2: Länge Liegefläche
- S1: Sitzwinkel
- S2: Sitzwinkel
- Z1: Breite Kabinenzugang
- A1: Längsabstand
- A2: Längsabstand

## Patentansprüche

1. Flugzeugsitzanordnung für eine Flugzeugkabine (10), mit einer Längsachse (16),
mit wenigstens einem ersten Flugzeugsitz (38, 40, 42), der als Teil eines ersten Flugzeugsitzbereichs (44) und einer ersten,
gangentfernten Sitzreihe (18, 24, 26. 32) ausgebildet ist, eine Flugzeugsitzachse (52) ausbildet, die einen Sitzwinkel (S1) mit der Längsachse (16) einschließt, und mit wenigstens einem zweiten, benachbart zu dem ersten Flugzeugsitz (38, 40, 42) angeordneten Flugzeugsitz (54, 56, 58), der wenigstens als Teil eines zweiten Flugzeugsitzbereichs (60) und einer
zweiten, gangseitigen Sitzreihe (20, 22, 28, 30) ausgebildet ist und eine Flugzeugsitzachse (66) ausbildet, die einen Sitzwinkel (S2) mit der Längsachse (16) einschließt, wobei der Sitzwinkel (S1) des ersten Flugzeugsitzes (38, 40, 42) und der Sitzwinkel (S2) des zweiten Flugzeugsitzes (54, 56, 58) betragsmäßig unterschiedlich groß sind, wobei die Flugzeugsitze (38, 40, 42, 54, 56, 58) der beiden unterschiedlichen Sitzreihen (18, 20, 22, 24, 26, 28, 30, 32) in einer Querrichtung teilweise überlappend angeordnet sind, wodurch der eine zweite Flugzeugsitz (54, 56, 58) der zweiten Sitzreihe (20, 22, 28, 30), in Längsrichtung gesehen, zumindest in einem Teilbereich unmittelbar hinter dem einen ersten Flugzeugsitz (38, 40, 42, 54, 56, 58) der ersten Sitzreihe (18, 20, 22, 24, 26, 28, 30, 32) angeordnet ist, wobei der erste Flugzeugsitz (38) in einer Liegestellung eine im Wesentlichen ebene Liegefläche (50) und der zweite Flugzeugsitz (54) in einer Liegestellung eine im Wesentlichen ebene Liegefläche (62) ausbildet, wobei die Liegefläche (50, 62) jeweils eine Haupterstreckung von 175 cm bis 205 cm aufweist, wobei
der wenigstens eine erste Flugzeugsitz (38, 40, 42) einen positiven Sitzwinkel (S1), der zwischen 4 Grad und 15 Grad beträgt, und der wenigstens eine zweite Flugzeugsitz (54, 56, 58) einen negativen Sitzwinkel (S2) relativ zu der Längsachse (16) ausbildet, wodurch der erste Flugzeugsitz (38) und der zweite Flugzeugsitz (54) in unterschiedliche Richtungen, ausgehend von der Längsachse (16), verschwenkt sind, wobei der erste Flugzeugsitz (38, 40 ,42) einen direkten Gangzugang aufweist, der nicht durch einen Flugzeugsitzbereich (60) eines anderen Flugzeugsitzes führt und jeder Flugzeugsitzbereich (44, 60) des ersten Flugzeugsitzes (38, 40, 42) und des zweiten Flugzeugsitzes (54, 56, 58) einen Durchgangsbereich aufweist, der den Flugzeugsitzbereich (44, 60) direkt mit einem Kabinengang (34) verbinden kann.

2. Flugzeugsitzanordnung nach Anspruch 1, wobei sich die Sitzwinkel des ersten Flugzeugsitzes (38, 40, 42) und des zweiten Flugzeugsitzes (54, 56, 58) betragsmäßig um zumindest 1 Grad unterscheiden.

3. Flugzeugsitzanordnung nach Anspruch 1 oder 2, wobei die Flugzeugsitze (38, 40, 42, 54, 56, 58) beider Sitzreihen (18, 20, 22, 24, 26, 28, 30, 32) jeweils einen barrierefreien Kabinengangzugang aufweisen.

4. Flugzeugsitzanordnung nach einem der vorhergehenden Ansprüche, wobei der wenigstens eine erste Flugzeugsitz (38, 40, 42) der ersten Sitzreihe (18, 24, 26, 32) gangabgewandt angeordnet ist.

5. Flugzeugsitzanordnung nach einem der vorhergehenden Ansprüche, wobei der Sitzwinkel (S2) des Flugzeugsitzes (54, 56, 58) der zweiten Sitzreihe (20, 22, 28, 30) zwischen 10 und 20 Grad beträgt.

6. Flugzeugsitzanordnung nach einem der vorhergehenden Ansprüche, wobei der wenigstens eine zweite Flugzeugsitz (54, 56, 58) der zweiten Sitzreihe (20, 22, 28, 30) gangseitig angeordnet ist.

7. Flugzeugsitzanordnung nach einem der vorhergehenden Ansprüche, wobei zumindest einen weiteren, hinter dem ersten Flugzeugsitz (38) der ersten Sitzreihe (18) angeordneten weiteren ersten Flugzeugsitz (40), wobei ein Längsabstand (A1) des einen ersten Flugzeugsitzes (38) der ersten Sitzreihe (18) zu dem einen, unmittelbar benachbart angeordneten zweiten Flugzeugsitz (54) der zweiten Sitzreihe (20) unterschiedlich groß ist wie der Längsabstand (A2) des einen zweiten Flugzeugsitzes (54) der zweiten Sitzreihe (20) zu dem weiteren ersten Flugzeugsitz (40) der ersten Sitzreihe (18).

8. Flugzeugsitzanordnung nach einem der vorhergehenden Ansprüche, wobei die ersten und zweiten Flugzeugsitze (38, 40, 42, 54, 56, 58) dazu vorgesehen sind, zumindest in einer Liegestellung eine Liegefläche (50, 62), vorzugsweise eine vollständige Liegefläche (50, 62) auszubilden.

9. Flugzeugsitzanordnung nach einem der vorhergehenden Ansprüche, wobei die Flugzeugkabine (10) lediglich einen Kabinengang (34) aufweist.

## Claims

1. Aircraft seat arrangement for an aircraft cabin (10),
with a longitudinal axis (16),
with at least one first aircraft seat (38, 40, 42), which is realized as part of a first aircraft seat region (44) and of a first seat row (18, 24, 26, 32) that is spaced apart from an aisle, which forms an aircraft seat axis (52) including a seat angle (S1) with the longitudinal axis (16), and
with at least one second aircraft seat (54, 56, 58) neighboring the first aircraft seat (38, 40, 42), which is realized at least as part of a second aircraft seat region (60) and of a second, aisle-side seat row (20, 22, 28, 30), which forms an aircraft seat axis (66) including a seat angle (S2) with the longitudinal axis (16), the seat angle (S1) of the first aircraft seat (38, 40, 42) and the seat angle (S2) of the second aircraft seat (54, 56, 58) differing in their absolute values,
wherein the aircraft seats (38, 40, 42) of the two differing seat rows (18, 20, 22, 24, 26, 28, 30, 32) are arranged at least partially overlapping in a transversal direction, as a result of which, viewed in a longitudinal direction, the one second aircraft seat (54, 56, 58) of the second seat row (20, 22, 28, 30) is at least in a partial region arranged directly behind the one first aircraft seat (38, 40, 42, 54, 56, 58) of the first seat row (18, 20, 22, 24, 26, 28, 30, 32),
wherein the first aircraft seat (38) forms in a lying-down position a substantially planar lying-down surface (50) and the second aircraft seat (54) forms in a lying-down position a substantially planar lying-down surface (62), the lying-down surface (50, 62) in each case having a main extent of 175 cm to 205 cm,
wherein the at least one first aircraft seat (38, 40, 42) forms a positive seat angle (S1) that is between 4 degreees and 15 degrees, and the at least one second aircraft seat (54, 56, 58) forms a negative seat angle (S2) relative to the longitudinal axis (16),
as a result of which the first aircraft seat (38) and the second aircraft seat (54) are pivoted, starting from the longitudinal axis (16), in different directions, wherein the first aircraft seat (38, 40, 42) has a direct aisle access that does not go through an aircraft seat region (60) of another aircraft seat,
each aircraft seat region (44, 60) of the first aircraft seat (38, 40, 42) and of the second aircraft seat (54, 56, 58) having a passage region which may connect the aircraft seat region (44, 60) directly to a cabin aisle (34).

2. Aircraft seat arrangement according to claim 1,
wherein the seat angles of the first aircraft seat (38, 40, 42) and of the second aircraft seat (54, 56, 58) differ in absolute value by at least 1 degree.

3. Aircraft seat arrangement according to claim 1 or 2,
wherein the aircraft seats (38, 40, 42, 54, 56, 58) of both seat rows (18, 20, 22, 24, 26, 28, 30, 32) in each case have a barrier-free cabin access.

4. Aircraft seat arrangement according to one of the preceding claims,
wherein the at least one first aircraft seat (38, 40, 42) of the first seat row (18, 24, 26, 32) is arranged facing away from the aisle.

5. Aircraft seat arrangement according to one of the preceding claims,
wherein the seat angle (S2) of the aircraft seat (54, 56, 58) of the second seat row (20, 22, 28, 30) is between 10 and 20 degrees.

6. Aircraft seat arrangement according to one of the preceding claims,
wherein the at least one second aircraft seat (54, 56, 58) of the second seat row (20, 22, 28, 30) is arranged on an aisle side.

7. Aircraft seat arrangement according to one of the preceding claims,
with at least one further first aircraft seat (40) arranged behind the first aircraft seat (38) of the first seat row (18),
wherein a longitudinal distance (A1) from the one first aircraft seat (38) of the first seat row (18) to the one directly neighboring second aircraft seat (54) of the second seat row (20) has a different size than the longitudinal distance (A2) from the one second aircraft seat (54) of the second seat row (20) to the further first aircraft seat (40) of the first seat row (18).

8. Aircraft seat arrangement according to one of the preceding claims,
wherein the first and second aircraft seats (38, 40, 42, 54, 56, 58) are configured, at least in a lying-down position, to form a lying-down surface (50, 62), preferably a complete lying-down surface (50, 62).

9. Aircraft seat arrangement according to one of the preceding claims, wherein the aircraft cabin (10) comprises only one cabin aisle (34).

## Revendications

1. Agencement de sièges d'avion pour une cabine d'avion (10),
avec un axe longitudinal (16),
avec au moins un premier siège d'avion (38, 40, 42), réalisé comme partie d'une première zone de siège d'avion (44) et d'une première rangée de sièges (18, 24, 26, 32) écartée d'un couloir, qui forme un axe de siège d'avion (52) incluant un angle de siège (S1) avec l'axe longitudinal (16),
et avec au moins un deuxième siège d'avion (54, 56, 58) agencé en avoisinant le première siège d'avion (38, 40, 42) et réalisé au moins comme partie d'une deuxième zone de siège d'avion (60) et d'une deuxième rangée de sièges côté-couloir (20, 22, 28, 30), qui forme un axe de siège d'avion (66) incluant un angle de siège (S2) avec l'axe longitudinal (16),
l'angle de siège (S1) du premier siège d'avion (38, 40, 42) et l'angle de siège (S2) du deuxième siège d'avion (54, 56, 58) étant différents en valeur absolue, les sièges d'avion (38, 40, 42, 54, 56, 58) des deux rangées de sièges différentes (18, 20, 22, 24, 26, 28, 30, 32) étant agencés en chevauchement partiel en direction transversale, en sorte que vue en direction longitudinale, l'un siège d'avion deuxième (54, 56, 58) de la deuxième rangée de sièges (20, 22, 28, 30) soit disposé, au moins dans une région partielle, directement derrière l'un premier siège d'avion (38, 40, 42, 54, 56, 58) de la première rangée de sièges (18, 20, 22, 24, 26, 28, 30, 32), où le premier siège d'avion (38) forme dans une position de couchage une surface de couchage (50) sensiblement planaire et le deuxième siège d'avion (54) forme dans une position de couchage une surface de couchage (62) sensiblement planaire, la surface de couchage (50, 62) respectivement ayant une étendue principale de 175 cm à 205 cm,
l'au moins un premier siège d'avion (38, 40, 42) formant un angle de siège positif (S1) qui est entre 4 degrés et 15 degrés, et l'au moins un deuxième siége d'avion (54, 56, 58) formant un angle de siège négatif (S2) par rapport à l'axe longitudinal (16), en sorte que le premier siège d'avion (38) et le deuxième siège d'avion (54) soient pivotés en directions différentes à partir de l'axe longitudinal (16),
le premier siège d'avion (38, 40, 42) ayant un accès directe au couloir directe qui ne traverse pas une zone de siège d'avion (60) d'un autre siège d'avion, et chaque zone de siège d'avion (44, 60) du premier siège d'avion (38, 40, 42) et du deuxième siège d'avion (54, 56, 58) comprenant une zone de passage qui peut relier la zone de siège d'avion (44, 60) directement à un couloir de cabine (34).

2. Agencement de sièges d'avion selon la revendication 1,
où les angles de siège du premier siège d'avion (38, 40, 42) et du deuxième siège d'avion (54, 56, 58) diffèrent en valeur absolue par au moins un degré.

3. Agencement de sièges d'avion selon la revendication 1 ou 2,
où les sièges d'avion (38, 40, 42, 54, 56, 58) des deux rangées de sièges (18, 20, 22, 24, 26, 28, 30, 32) respectivement comprennent un accès au couloir de cabine sans barrières.

4. Agencement de sièges d'avion selon l'une des revendications précédentes, où l'au moins un premier siège d'avion (38, 40, 42) de la première rangée de sièges (18, 24, 26, 32) est disposé d'une telle manière qu'il soit détourné du couloir.

5. Agencement de sièges d'avion selon l'une des revendications précédentes, où l'angle de siège (S2) du siège d'avion (54, 56, 58) de la deuxième rangée de sièges (20, 22, 28, 30) est entre 10 degrés et 20 degrés.

6. Agencement de sièges d'avion selon l'une des revendications précédentes, où l'au moins un deuxième siège d'avion (54, 56, 58) de la deuxième rangée de sièges (20, 22, 28, 30) est disposé côté-couloir.

7. Agencement de sièges d'avion selon l'une des revendications précédentes,
avec au moins un autre premier siége d'avion (40) agencé derrière le premier siège d'avion de la première rangée de sièges (18),
où une distance longitudinale (A1) entre l'un premier siège d'avion (38), directement avoisinant, de la première rangée de sièges (18) et l'un deuxième siège d'avion (54) de la deuxième rangée de sièges (20) diffère en taille de la distance longitudinale (A2) entre l'un deuxième siège d'avion 54) de la deuxième rangée de sièges (20) et l'autre premier siège d'avion (40) de la première rangée de sièges (18).

8. Agencement de sièges d'avion selon l'une des revendications précédentes, où les premiers et deuxièmes sièges d'avion (38, 40, 42, 54, 56, 58) sont prévus pour former, au moins dans une position de couchage, une surface de couchage (50, 62), préférablement une surface de couchage (50, 62) complète.

9. Agencement de sièges d'avion selon l'une des revendications précédentes, où la cabine d'avion (10) comprend seulement un couloir de cabine (34).
